# EUROPEAN PATENT APPLICATION

(11) **EP 0 597 270 A2**
(43) Date of publication of application: **18.05.1994**
(21) Application number: 93116561.7
(22) Date of filing: 13.10.1993
(51) Int. Cl.: C21C 5/46, C21C 5/48

(54) **A method for operating a multimedia tuyère and the tuyère system**

(30) Priority: 11.11.1992 DE 4238020
(71) Applicant: KCT TECHNOLOGIE GmbH, D-22047 Hamburg (DE)
(72) Inventor: Klintworth, Klaus, D-21614 Buxtehude (DE); Steins, Johannes, A-4210 Gallneukirchen (AT); Berger, Harald, Dr., A-4020 Linz (AT)
(74) Representative: Kador & Partner

(57) **Abstract**

The invention relates to a method for operating multimedia tuyeres in metallurgical processes, whereby the tuyere has at least two inlet channels for various gaseous, liquid, pneumatically conveyable, solid substances and any mixtures of these media, being applied in that one or more of these tuyeres are disposed below and/or above the bath surface of a metallurgical smelt in the corresponding reaction vessel, wherein the media supply is temporarily switched off or the media pressure reduced to less than half the cut-in pressure in at least one of the media inlet channels of at least one multimedia tuyere during operation of a metallurgical process.

## Description

The present invention relates to a method for operating multimedia tuyeres in metallurgical processes and to this tuyere which has at least two inlet channels for various gaseous, liquid, pneumatically conveyable, solid substances and any mixtures of these media, being applied in that one or more of these tuyeres are disposed below and/or above the bath surface of a metallurgical smelt in the corresponding reaction vessel.

In many modern metallurgical processes involving a molten bath, such as refining methods in lead and copper production and in steel finery, tuyeres are used for supplying reacting agents below and above the bath surface. In today's steelmaking with pure oxygen water-cooled lances with corresponding tuyere heads are used for top-blowing oxygen in LD converters, and inert gas is fed to the smelt through bottom purging elements with tubular or slotlike gas inlet channels to maintain a sufficient bath motion.

With the introduction of the bottom-blowing steel refining process, the OBM method, and its further development, the KMS process, tuyeres have become important for passing in oxygen with and without a lime load, jacketed by a hydrocarbon-containing protective medium. Top-blowing tuyeres disposed above the steel bath surface in the lining of the refining vessel for supplying oxygenous gases to afterburn the reaction gases in the gas space of the steelmaking converter and increase the scrap smelting capacity have also become a topic of interest among experts.

German patent no. 15 83 968 is the basic application for the OBM method, describing the refining of pig iron in a bottom-blowing converter wherein oxygen and a nitrogen-free jacket gas are blown into the smelt through tuyere pipes disposed in the converter bottom, this process being characterized by the combination of measures known as such for producing a directed circulating motion of the smelt by means of tuyeres disposed in one half of the bottom and feeding the tuyeres with hydrocarbon gas as a jacket gas. The KMS process, described for the first time by German patent no. 27 55 165, is characterized by the increased scrap rate in the refining of pig iron in a converter having oxygen inlet tuyeres with a protective medium jacket below and above the bath surface, wherein 20% to 80% of the amount of refining oxygen is fed to the smelt during a substantial part of the refining period by one or more gas jets directed onto the bath surface and acting as free jets in the converter gas space.

Along with these refining methods for steelmaking, coal gasification in an iron bath exploits iron metallurgy as described for instance in German laid-open print no. 25 20 883. This method for continuous gasification of coal or carbonaceous fuels in an iron bath reactor with a slag layer into a gas comprising substantially CO and H₂, with fuel and gasification medium being passed in below the bath surface of the iron bath through one or more tuyeres, is characterized in that coal or carbonaceous fuels and oxygen or oxygenous gases, the latter jacketed by hydrocarbons, are fed to the smelt.

Although the stated processes pursue different objectives they share the application of media tuyeres below and above the molten bath. This fact indicates the great importance of these media tuyeres with respect to construction and operation for metallurgical processes. The prior art accordingly shows a number of tuyere systems and operating methods for these tuyeres.

For steel finery with underbath tuyeres one still uses mainly systems comprising two concentric pipes as already described in the abovementioned first OBM patent. The slag-forming solids, in particular powdered lime, are loaded on the oxygen flowing through the central pipe of the tuyere and thus require no separate tuyere inlet channel. German patent no. 23 24 086 relates to a tuyere construction with a third concentric pipe in which the actual tuyere comprising two concentric pipes is displaceably disposed. The advantages of this invention include the possibility of repairing the refractory material in the immediate tuyere surroundings.

German patent no. 24 38 142 relates to a tuyere for passing in reaction gas, the tuyere center comprising a solid core not flooded by reaction gas, and the media feed channels being annular gaps or similar to annular gaps. The reaction gas inlet channels can also contain guide elements, for example spiral-shaped and helical baffle plates, for giving the reaction gas a twist and thus increasing the angle of emergence of these gases.

In connection with coal gasification in an iron bath other tuyere constructions and modes of operation are stated. For instance German laid-open print 25 20 883 describes tuyeres comprising four or more concentric pipes and the mixing of the reacting agents, oxygen and coal, before the tuyere mouth, i.e. within the tuyere. To effect this mixing operation a central pipe is located within two equally long concentric pipes, being shorter than these two outer pipes, the tuyere protecting medium flows through the annular gap between the two outer pipes and the reacting agents flow firstly through the annular gap beside the central pipe and secondly through the central pipe itself. To influence the flow characteristics of the media being passed into the smelt this application likewise mentions guiding elements in the annular gaps.

Known publications on the operation of tuyeres for various media and gas-solid suspensions particularly stress keeping the pressure sufficiently high in each inlet channel of the tuyere. For example special control means are known for maintaining the required pressure upon a change of medium in one inlet channel. One example representing a great number of corresponding descriptions and patents is the pressure control of a special valve for the media supply of tuyeres according to German patent no. 31 43 795.

The constant flooding of each inlet channel of a media feed tuyere also results in disadvantages for the operation of the metallurgical processes. For example, if a gas-solid suspension is blown into the molten bath through a separate tuyere channel and the solids (e.g. slag-forming agents or fuels) are no longer required after a certain process time, the tuyere channel must still be subjected to the carrier gas or another inert gas at sufficient pressure to remain operative in known methods. This leads to a relatively high gas consumption and corresponding costs. Also, the gas simultaneously cools the smelt and this thermal loss has an unfavorable effect on the process heat balance.

The present invention is accordingly based on the problem of developing an advantageous method for operating a media feed tuyere and a tuyere system for supplying two or more media that make it possible to work economically and with high operating reliability without the stated disadvantages of known tuyeres. The possible uses, reliable control and safe operating mode of known tuyere systems should be retained, and the application of the new media tuyeres should furthermore lower the media consumption when operated both above and below the metal bath surface, and ensure an improved process heat balance.

The solution to this problem is to switch off the media supply or reduce the media pressure to less than half the cut-in pressure in at least one of the media inlet channels of the tuyere during operation of the metallurgical process with at least one of these multimedia tuyeres in a method of the type mentioned at the outset.

The object of the invention is a method for operating multimedia tuyeres in metallurgical processes whereby the tuyere has at least two inlet channels for various gaseous, liquid, pneumatically conveyable, solid substances and any mixtures of these media, being applied in that one or more of these tuyeres are disposed below and/or above the bath surface of a metallurgical smelt in the corresponding reaction vessel, characterized in that the media supply is temporarily switched off or the media pressure reduced to less than half the cut-in pressure in at least one of the media inlet channels of at least one multimedia tuyere during operation of a metallurgical process.

The object of the invention is also a multimedia tuyere for carrying out the method having at least two inlet channels, these channels substantially comprising interpenetrating, tubular media inlet means, preferably concentrically disposed pipes, this multimedia tuyere being characterized in that the outer tubular media inlet means having clear diameter a contains a second media inlet means in such a way that the latter is set back in the outer media inlet means by at least length b corresponding to diameter a.

The object of the invention is also the application of the stated method and the multimedia tuyere for steelmaking in any refining vessels, the refining of nonferrous smelts, coal gasification, the smelting reduction of metal ores and the disposal of waste products such as contaminated dusts.

In an unforeseeable way the method according to the invention permits the complete switch-off of a medium or at least a reduction of the feed pressure to less than half the cut-in pressure for this medium in a multimedia tuyere, i.e. a tuyere having at least two inlet channels for various media which can be installed in a reactor vessel below and/or above a metal bath surface. This surprising finding, which actually conflicts with the known view that a sufficient gas pressure must be maintained in each media feed channel of a tuyere, results in a number of very positive designs for the inventive method. Along with the desired economic improvements, in particular through the saving of purging gas for the tuyere channels as required in known tuyere operation, and the clear reduction of thermal losses since these purging gases need no longer be heated, one obtains further simplifications in particular with respect to process control, through the saving of control means and valves plus drive means, which have favorable effects on the economy and operating reliability of the inventive method.

According to the invention the supply of one of the three media can be completely switched off after any desired operating time in an underbath tuyere comprising three concentric pipes, the outer tuyere pipe containing the two other tuyere pipes set inwardly by about twice the length of the outer tuyere pipe diameter. If this underbath tuyere is used for example to pass in carbonaceous solid fuels, such as coke or coal in suspension with a carrier gas (nitrogen), and oxygen and a tuyere protecting medium, the fuel supply can be switched off after a precalculated pass-in time without letting the conveying gas flow on. After a certain interruption period the fuel supply can also be resumed for example for temperature correction of the molten bath and then switched off again. The number of such interruptions in the supply of a medium can be selected at will, up to pulsed conveyance. In the operation of this described underbath tuyere the tuyere protecting medium, mainly gaseous or liquid hydrocarbons such as natural gas, propane, light fuel oil, normally flows in the outer annular gap and oxygen is conducted through the next annular gap and the fuel-conveying gas suspension, for example anthracite and nitrogen, through the central pipe. However the oxygen can also pass through the central pipe and the fuel supply through the adjacent annular gap.

According to a further feature of the invention the media supply need not be completely switched off; a residual flow can be maintained. For example the pressure at the inlet of the multimedia tuyere for the fuel-gas suspension is about 4 bars and in case of a partial switch-off the conveying gas can flow on at a pressure of 1.5 bars.

According to a further design of the inventive method the described tuyere can also have four media inlet channels and thus be constructed in the simplest case from four concentric pipes, whereby air or preheated air is passed into the molten bath additionally e.g. in the annular gap beside the central pipe, and when the fuel supply is switched off the air flow can also be interrupted or reduced to a minimal residual amount.

The inventive method can also be employed successfully for top-blowing different media onto the metal bath surface. For example it can be successfully used for afterburning the reaction gases emerging from a molten bath, mainly CO and H₂, and even improves the retransfer of the heat obtained from afterburning to the molten bath from case to case. The method according to the invention is also successfully used for increasing the energy supply in the KES process, described in German patent no. 36 39 055. It has also made it possible to increase the heat transfer from reaction gas afterburning.

The inventive multimedia tuyere can also be constructed as a top-blowing tuyere from three or more concentric pipes with the inner pipes set back in the outer tuyere pipe by at least the diameter of the outer tuyere pipe, and in the inventive application of this multimedia tuyere the media flow is switched off or considerably throttled, i.e. the media pressure reduced to less than half the cut-in pressure, at least once during the process in at least one of the media inlet channels.

According to an advantageous design of the invention the multimedia tuyere disposed above the bath surface has an outer pipe which is positively cooled, e.g. air- and/or water-cooled, and inner pipes recessed therein, for example three recessed concentric pipes, with air flowing through the first annular gap beside the water-cooled outer pipe, coal dust through the second annular gap, natural gas through the third annular gap beside the central pipe and oxygen through the central pipe. Depending on the operating mode one, two or three of these media flows can be switched off. For example it has proven useful in the operation of the multimedia tuyere to switch off all media but the oxygen after approximately half the batch time and a switch-on phase in which the four media flow as described, and to pass only oxygen into the gas space of the refining vessel for afterburning the reaction gases.

According to a further feature of the invention it is possible to obtain higher outlet rates and thus increased media throughputs by forming the tuyere mouth, the mouths of the individual media feed channels and in particular the mouth of the central pipe as Laval nozzles. It is also within the scope of the invention to give the surfaces of the individual media inlet channels a wear-resistant design. This can be done e.g. by hard-chrome plating or buildup welding. Cemented ceramic pipes have proven advantageous, in particular in the channels for transporting gas-solid suspensions. It is also within the scope of the invention to use the same or different materials for the media feed channels, i.e. preferably for the concentric pipes. For example copper can be used for water-cooled outer pipes while the other pipes are made of normal steel or special steel including wear-resistant special steel alloys.

In the supply pipes for the individual media it has proven useful to install return valves or check valves. These return valves are preferably disposed between the collecting supply pipe and the multimedia tuyere, i.e. in the feed pipe for each individual media channel.

In the inventive application of the multimedia tuyere as a top-blowing tuyere it is disposed above the metal bath surface, preferably penetrating the refractory lining of the reaction vessel, for example in the side wall or the upper conic part of a steelmaking converter or the vault of an elongate copper refining furnace. The multimedia tuyere is then usually constructed from three or more concentric pipes and the various media as required by the metallurgical process are blown onto the bath surface through the individual annular gaps and the central pipe. The tuyere has at least two media inlet channels, whereby one medium can be switched off at least once or repeatedly during the operating time of the metallurgical process according to the method for operating the multimedia tuyere. If there are more than two inlet channels in a multimedia tuyere all media but one can accordingly be switched off.

An advantageous design of the inventive multimedia tuyere is to give it a lance shape and install it movably in the wall or the roof of the metallurgical reaction vessel. This movable arrangement of the multimedia tuyere permits it to be stationed in an optimal top-blowing position before each campaign, or the blowing direction of the tuyere to be varied relative to the metal bath surface between various process sections and also during operation of the process. The installed height of the multimedia tuyere can also be varied within certain limits by shifting it in the direction of its longitudinal axis. Top-blowing angles for the gas jets of the multimedia tuyere between 20 _{°} and 90 _{°} relative to the still bath surface have proven useful for example. The top-blowing height, i.e. the height between the still bath surface and the mouth of the multimedia tuyere, can be varied relatively freely in accordance with the vessel height. In practice, variation ranges of about 1 m have proven favorable here, for example from a height 1.50 to 2.50 m above the bath surface or from 2.50 to 3.50 m up to about 9 m to 10 m.

If the multimedia tuyere has a lance-shaped design a positive cooling of the outer tuyere pipe is preferred according to the invention.

It is within the scope of the inventive method to advance at most one further tuyere pipe beside the outer tuyere pipe so that these two outer tuyere pipes of approximately equal length form an annular gap through which a tuyere protecting medium preferably flows during operation of the metallurgical process. These two outer advanced tuyere pipes contain at least one further, recessed tuyere pipe. With this tuyere design the mouth space is formed by the interior of the two advanced outer tuyere pipes and the recessed one or more tuyere pipes. This inner pipe is set back from the tip of the tuyere by distance b corresponding to at least diameter a of the inner advanced pipe. This embodiment of the multimedia tuyere has proven useful both as a top-blowing tuyere and as an underbath tuyere by the method for operating it in metallurgical processes. However it is preferably used for passing in the reactants below the bath surface.

With the underbath design of the inventive multimedia tuyere the further concentric pipes disposed in the outer tuyere pipe or within the two advanced outer tuyere pipes can be installed so as to be displaceable on the longitudinal tuyere axis, preferably in such a way that the inner pipes can be moved toward the outside of the vessel. This possibility of withdrawing the media inlet channels within the at most two outer advanced tuyere pipes creates the precondition for maintaining at any time a distance b, corresponding at least to the diameter of the inner advanced tuyere pipe, between the mouth of the tuyere and the recessed inner pipes. According to the invention this prevents one or more of the inner tuyere pipes from protruding beyond the outer advanced tuyere pipes, i.e. protruding further into the molten bath than the outer tuyere pipe, as shown for instance in Figure 1 of German patent no. 17 58 816. This operating state of the multimedia tuyere is undesirable and to be avoided in the application of a multimedia tuyere according to the invention.

In the inventive method for operating a multimedia tuyere it has proven advantageous if the switch-off or throttling means for switching off the media supply to the inlet channels or reducing the media pressure to less than half the cut-in pressure are not mounted directly on the reaction vessel or immediately on the tuyere flange but shifted into the area of normal ambient temperature. For example, in a converter for steelmaking these switching members should be installed before the converter pivot (regarded upstream of the tuyeres) through which the pipes to the tuyeres are then conducted. It has proven advantageous for the operating reliability of these switch-off or throttle valves to dispose them in an environment with customary room temperature.

One possible explanation for the surprising effect of the inventive method for operating a multimedia tuyere is that when the media supply is switched off for a media inlet channel the very turbulent flow in the front space of the tuyere, which is formed only by the advanced outer tuyere pipes over length b (corresponding at least to diameter a of the outer tuyere pipe or, if there are two advanced outer tuyere pipes, to diameter a of the inner one of these two pipes), prevents molten bath from flowing into this so-called mouth space of the multimedia tuyere. When a media supply is switched off at least one medium, or further media depending on the tuyere action, flow into the mouth space of the multimedia tuyere at approximately the speed of sound. To ensure this relatively high media speed it is within the scope of the invention to use a media admission pressure of at least 3 bars at the tuyere inlet. According to a further feature of the invention the central pipe of the multimedia tuyere can be formed e.g. as a Laval nozzle so that the medium flows out of this media inlet channel into the mouth space of the tuyere at supersonic speed.

A further conceivable explanation for the high durability of the multimedia tuyere in its underbath arrangement involves the premixing of oxidizing gases, for example oxygen or air, with the tuyere protecting medium, for example natural gas, in the tuyere mouth space. One explanation for the effect of hydrocarbons for protecting underbath tuyeres is that they retard the reaction between oxygen and molten bath, and this might be improved by the premixing of these two media in the tuyere mouth space. Furthermore it is known that with normal underbath tuyeres comprising two concentric pipes a high proportion of the tuyere protecting medium is lost for tuyere protection as vagrant gas in the refractory lining. With the inventive multimedia tuyere the passing of the tuyere protecting medium into the mouth space might improve the utilization of the hydrocarbons for direct tuyere protection.

The inventive method and multimedia tuyere shall now be explained in more detail by pictures and nonrestrictive examples.

Figure 1 shows a longitudinal section through a multimedia tuyere installed in the refractory brickwork of the metallurgical reaction vessel below the metal bath surface.

Figure 2 shows a longitudinal section through a water-cooled multimedia tuyere as is normally installed in the reactor vessel above the metal bath surface.

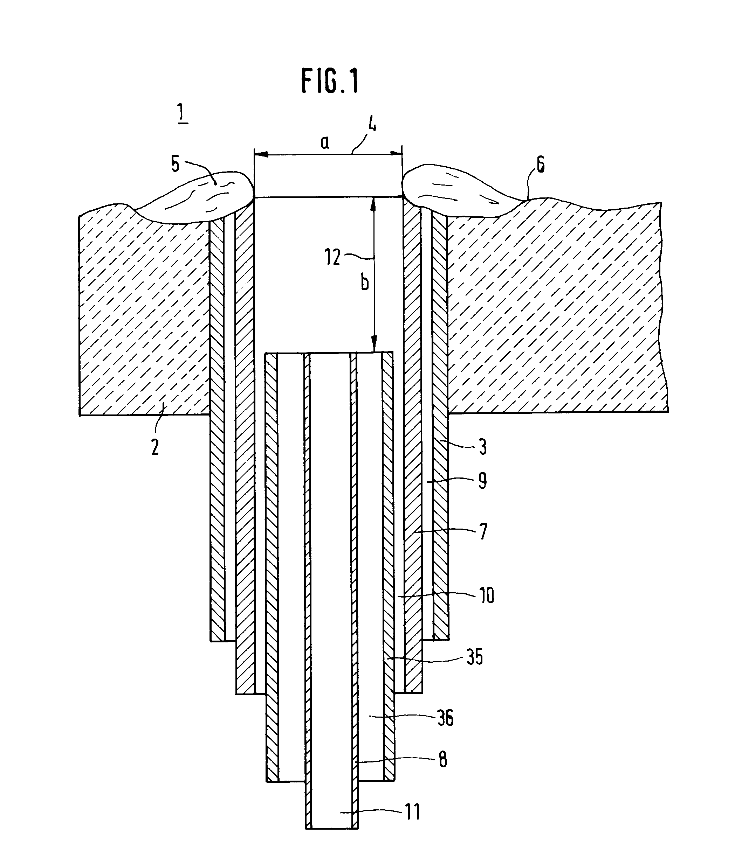

According to Figure 1 outer pipe 3 of the multimedia tuyere is located in refractory brickwork 2 below molten bath 1. Outer tuyere pipe 3 contains another, advanced tuyere pipe 7, and these two tuyere pipes 3 and 7 form outer advanced annular gap 9 through which a tuyere protecting medium preferably flows during the operating time. Tuyere pipe 7 has diameter 4 referred to as a. At the tuyere mouth one can see the typical mushroom 5. The refractory lining surface is marked by line 6.

Advanced outer pipes 3 and 7 of the multimedia tuyere contain two further concentric pipes 35 and 8 which form recessed media inlet channels 10 and 36 of circular cross section, regarded from the outside toward the inside. Central media inlet channel 11 has a circular cross section with the inside diameter of pipe 8. Pipes 35 and 8 are set back in outer pipes 3 and 7 by length 12 referred to as b.

The mouth space of the multimedia tuyere is accordingly defined by length or height 12 referred to as b and the inside diameter of pipe 7 referred to as a.

These multimedia tuyeres, disposed in the refractory lining below the metal bath surface, have proven useful for instance in steelmaking in oxygen blow-through converters. In a 60 t KMS converter one uses different scrap rates and thus adapts to the production requirements. To increase the scrap rate from 10 t to 20 t one blows about 2200 kg of coke and additionally about 2000 Nm³ of oxygen into the smelt. The bottom of the KMS converter contains six of the described multimedia tuyeres. For steel finery about 20 Nm³/min of natural gas flows through outer media channels 9, which corresponds to an amount of about 8% based on the oxygen throughput. Through second media inlet channel 10 air is fed to the smelt, through third channel 36 oxygen and through central media channel 11 ground coke in suspension with nitrogen. The blow rates for the coke are about 180 kg/min and for the oxygen about 250 Nm³/min. After about 12 minutes of blowing time the coke supply through media inlet channel 11 and the air supply through channel 10 are switched off. From this time on only oxygen flows through media inlet channel 36 and natural gas through outer media inlet channel 9. After 5 more minutes, i.e. a total blowing time of 17 minutes, the batch is completely refined and tapped off from the converter with a carbon content of about 0.02%.

The described multimedia tuyeres in the bottom of a steelmaking converter wear uniformly with surrounding refractory brickwork 2. Outer tuyere pipes 3 and 7 normally burn back at a rate of wear of less than 1 mm/batch. Inner concentric tuyere pipes 35 and 8 can be shifted outward by an apparatus not shown to adjust length 12 referred to as b to a desired measure for the tuyere mouth space. According to experience tuyere pipes 35 and 8 are withdrawn by about the value of diameter 4 referred to as a approximately every 30 to 50 smelts.

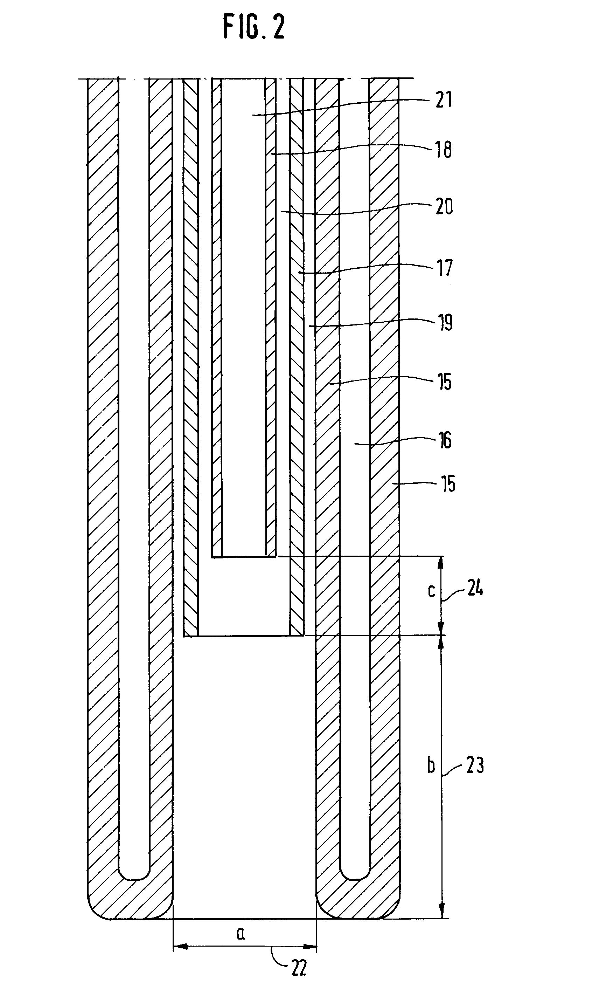

The multimedia tuyere according to Figure 2 comprises outer tuyere pipe 15 which is positively cooled. Water cooling is used, the coolant flowing through channel 16. This tuyere also has two concentric inner tuyere pipes 17 and 18, giving rise to media inlet channels 19, 20 and 21 regarded from the outside toward the inside. The tuyere mouth space has diameter 22 referred to as a and length 23 referred to as b. Tuyere pipe 18 is additionally set back in tuyere pipe 17 again by length 24 referred to as c.

The multimedia tuyere shown in Figure 2 has a lance-like form resulting mainly from outer water-cooled tuyere pipe 15, and this inventive tuyere is mainly suitable as a top-blowing tuyere for the various metallurgical processes. For example in steelmaking by the KES method it is mounted in the roof of the furnace and used as a heating or after-burning tuyere. Due to its movable suspension the multimedia tuyere can be adjusted to any desired top-blowing angle relative to the metal bath surface.

It has proven advantageous in operation in a refining vessel to charge the media inlet channels, from the outside toward the inside, with natural gas through channel 19, coal dust through channel 20 and oxygen through central pipe 21. After approximately half the batch time in steelmaking all media but oxygen are switched off and then only oxygen flows through channel 21 of the multimedia tuyere. This operating mode has permitted a very advantageous utilization of heat due to the afterburning of the reaction gases in the gas space of the furnace, and a clear saving of electric energy.

The multimedia tuyere for top-blowing in metallurgical processes can of course have four or more inlet channels, departing from Figure 2. If there are four media inlet channels natural gas flows in the outer annular gap, air in the next channel, then coal dust, and oxygen in the central pipe.

It has proven expedient in large-scale application of the method for operating a multimedia tuyere to operate the tuyere with oxygen in the central channel when using it above the smelt, i.e. as a top-blowing tuyere or lance, and to conduct the carbonaceous fuels through the central media inlet channel when using it as an underbath tuyere. According to the invention the method for operating multimedia tuyeres and the multimedia tuyere itself can be adapted to the various operating conditions of metallurgical processes without going beyond the scope of the invention. An example is the disposal of contaminated dusts. The dusts can be admixed to the fuel, such as pulverized coke, which is passed into the molten bath to compensate the process heat balance, or a contaminated powdery material or several of these dangerous dusts at the same time can be passed into or blown onto a metal bath through one or more additional media inlet channels of the multimedia tuyere. It is thus within the scope of the invention to accordingly vary the manifold possibilities of the multimedia tuyere and its operating method and simultaneously optimize them for the individual metallurgical method.

## Claims

1. A method for operating multimedia tuyeres in metallurgical processes, whereby the tuyere has at least two inlet channels for various gaseous, liquid, pneumatically conveyable, solid substances and any mixtures of these media, being applied in that one or more of these tuyeres are disposed below and/or above the bath surface of a metallurgical smelt in the corresponding reaction vessel, characterized in that the media supply is temporarily switched off or the media pressure reduced to less than half the cut-in pressure in at least one of the media inlet channels of at least one multimedia tuyere during operation of a metallurgical process.

2. The method of claim 1, characterized in that the media supply is repeatedly switched off and resumed in at least one inlet channel of the multimedia tuyere.

3. The method of claim 1 or 2, characterized in that the media pressure is repeatedly reduced to less than half the cut-in pressure and increased again in at least one inlet channel of the multimedia tuyere.

4. The method of one or more of claims 1 to 3, characterized in that the media supply is simultaneously switched off or the pressure reduced to less than half the cut-in pressure in at least two inlet channels of the multimedia tuyere.

5. The method of one or more of claims 1 to 4, characterized in that when the multimedia tuyere is operated above the bath surface in a metallurgical vessel, in particular operated as an afterburning tuyere for the reaction gases from the metallurgical smelt, the multimedia tuyere has a lance shape and the top-blowing height and/or top-blowing angle are adjustable.

6. A multimedia tuyere for carrying out the method of claims 1 to 5 which has at least two inlet channels and these channels substantially comprise interpenetrating tubular media inlet means, preferably concentrically disposed pipes, characterized in that the outer tubular media inlet means with clear diameter a contains a second media inlet means in such a way that the latter is set back in the outer media inlet means by at least length b corresponding to diameter a.

7. The multimedia tuyere of claim 6, characterized in that the second media supply means contains one or more further media supply means which are set back in the second media inlet means or end at approximately the same level as said means.

8. The multimedia tuyere of claims 6 and 7, characterized in that the media supply means are pipes in concentric arrangement and the different pipe diameters give rise to annular gaps between the individual pipes, the uniform widths of the annular gaps being ensured by spacers between the pipes.

9. The multimedia tuyere of one or more of claims 6 to 8, characterized in that the opening of the central pipe (central media supply means) is formed as a Laval nozzle.

10. The multimedia tuyere of one or more of claims 6 to 9, characterized in that the pipes/media supply means have wear-resistant surfaces.

11. The multimedia tuyere of one or more of claims 6 to 10, characterized in that the outer media supply means is positively cooled, preferably water-cooled.
